# FASCICULE DE BREVET EUROPEEN

(11) **EP 3 212 593 B1**
(45) Date de publication et mention de la délivrance du brevet: **01.08.2018**
(21) Numéro de dépôt: 15798505.2
(22) Date de dépôt: 27.10.2015
(51) Int. Cl.: C06B 23/00, C06B 45/10, C06B 45/02

(54) **PRODUIT PYROTECHNIQUE COMPOSITE AVEC CHARGES D'ADN ET DE RDX DANS UN LIANT DE TYPE PAG ET SA PREPARATION**
PYROTECHNISCHES ZUSAMMENGESETZTES PRODUKT MIT ADN- UND RDX-LADUNGEN IN EINEM GPA-BINDEMITTEL UND HERSTELLUNG DAVON
COMPOSITE PYROTECHNIC PRODUCT WITH ADN AND RDX CHARGES IN A GPA BINDER AND PREPARATION OF SAME

(30) Priorité: 28.10.2014 FR 1402432
(43) Date de publication de la demande: 06.09.2017
(73) Titulaire: ArianeGroup SAS, 75015 Paris (FR)
(72) Inventeur: LONGEVIALLE, Yves, F-91220 Bretigny Sur Orge (FR); GOLFIER, Martine, F-91540 Mennecy (FR); MORIN, Fabienne, F-91160 Saulx Les Chartreux (FR)
(74) Mandataire: Le Roux, Martine
(86) Numéro de dépôt international: PCT/FR2015/052889
(87) Numéro de publication internationale: WO 2016/066946

(56) Documents cités:
- EP-A2- 1 331 213
- WO-A1-98/49123
- FR-A1- 2 884 244
- US-A1- 2003 047 260
- DATABASE COMPENDEX [Online] ENGINEERING INFORMATION, INC., NEW YORK, NY, US; février 2012 (2012-02), GU J ET AL: "Energy characteristics calculation of insensitive and minimum smoke GAP solid propellant", XP002742390, Database accession no. E20121814985451 & GUTI HUOJIAN JISHU/JOURNAL OF SOLID ROCKET TECHNOLOGY FEBRUARY 2012 JOURNAL OF SOLID ROCKET TECHNOLOGY CHN, vol. 35, no. 1, février 2012 (2012-02), pages 88-92,
- MENKE K ET AL: "Formulation and Properties of ADN/GAP propellants", PROPELLANTS, EXPLOSIVES, PYROTECHNICS - SPECIAL ISSUE: 50 YEARS OF FRAUNHOFER INSTITUTE FOR CHEMICAL TECHNOLOGY JUNE 2009 WILEY-VCH VERLAG DEU, vol. 34, no. 3, juin 2009 (2009-06), pages 218-230, XP002742391, DOI: 10.1002/PREP.200900013
- LANDSEM E ET AL: "Mechanical properties of smokeless composite rocket propellants based on prilled ammonium dinitramide", PROPELLANTS, EXPLOSIVES, PYROTECHNICS DECEMBER 2012 WILEY-VCH VERLAG DEU, vol. 37, no. 6, décembre 2012 (2012-12), pages 691-698, XP002742392, DOI: 10.1002/PREP.201200004
- DATABASE COMPENDEX [Online] ENGINEERING INFORMATION, INC., NEW YORK, NY, US; décembre 2007 (2007-12), ZHANG L-Y ET AL: "Interaction of ADN with nitrate oxidizer", XP002742393, Database accession no. E20080611079462 & GUTI HUOJIAN JISHU/JOURNAL OF SOLID ROCKET TECHNOLOGY DECEMBER 2007 JOURNAL OF SOLID ROCKET TECHNOLOGY; 47TH INST. OF THE FOURTH ACADEMY OF CASC CN, vol. 30, no. 6, décembre 2007 (2007-12), pages 518-520+533,
- LANDSEM E ET AL: "Isocyanate-free and dual curing of smokeless composite rocket propellants", PROPELLANTS, EXPLOSIVES, PYROTECHNICS FEBRUARY 2013 WILEY-VCH VERLAG DEU, vol. 38, no. 1, février 2013 (2013-02), pages 75-86, XP002742394, DOI: 10.1002/PREP.201200108

## Description

La présente invention concerne des produits pyrotechniques composites, convenant notamment comme propergols solides pour chargements propulsifs de moteurs de fusée, tout particulièrement comme propergols solides pour chargements propulsifs de moteurs de missile tactique. Il s'agit de produits pyrotechniques composites renfermant un fort taux de charges énergétiques dans un liant énergétique. Lesdits produits, tout particulièrement dédiés aux moteurs de missiles tactiques, sont performants : en termes de vitesse de combustion,
en termes d'impulsion spécifique, et
en terme de discrétion, c'est-à-dire qu'ils ne contiennent pas, ou seulement en très faible quantité, dans leur composition, de constituants dont la combustion génère des produits halogénés ou des produits, liquides ou solides, qui donnent une "signature" visible ou infrarouge importante.

Dans le domaine des missiles tactiques, on recherche des propergols (dits «propres», i.e. très discrets) présentant une haute vitesse de combustion, très avantageusement supérieure ou égale à 20 mm/s à une pression de 10 MPa, et une forte impulsion spécifique, très avantageusement supérieure à 245 s (lorsqu'elle est calculée à 7 MPa pour une détente 70/1). On souhaite en tout état de cause, générer, pendant un temps court, un débit de gaz assurant une poussée forte.

Actuellement les propergols dits "propres" renferment comme charge énergétique du nitrate d'ammonium. L'impulsion spécifique et les vitesses de combustion de tels propergols restent faibles.

La publication d'Anders Larsson et Niklas Wingborg (2011), intitulée « Green Propellants Based on Ammonium Dinitramide (ADN) », dans « Advances in Spacecraft Technologies, Dr Jason Hall (Ed.), ISBN 978-953-307-8 », a évalué des propergols renfermant des charges énergétiques de dinitroamidure d'ammonium (« ammonium dinitramide » = ADN ; charges introduites sous la forme de « prills » (granulés sphériques (billes) préparé(e)s à partir de cristaux)), typiquement à des taux massiques (élevés) de 70 à 80 %, dans un liant énergétique de type polyazoture de glycidyle (PAG). De tels propergols ont des vitesses de combustion élevées, d'environ 30 mm/s à 10 MPa. Ils présentent également une impulsion spécifique élevée, d'environ 300 s (valeur calculée sous vide, correspondant à une valeur (calculée) d'environ 256 s à 7 MPa pour une détente 70/1). Ils répondent donc théoriquement au besoin.

Toutefois, l'homme du métier n'ignore pas que l'utilisation de l'ADN sous la forme de « prills » alourdit la fabrication de tout matériau renfermant ledit ADN. Il souhaite utiliser les cristaux d'ADN, directement obtenus par cristallisation d'ADN en solution, à l'issue de l'une de ses synthèses ou de tels cristaux simplement broyés. Ledit homme du métier est par ailleurs conscient des difficultés qui existent pour :
- manipuler les cristaux d'ADN : l'absorption d'eau par lesdits cristaux (qui augmente lorsque la taille desdits cristaux diminue) pose de sérieux problèmes ; et
- conditionner les cristaux d'ADN dans un polymère (ici le PAG) à réticuler avec des polyisocyanates (pour l'obtention du liant) : l'ADN, de par son acidité intrinsèque, consomme une partie de l'agent de réticulation (polyisocyanate(s)) présent et rend nécessaire l'utilisation d'un taux dudit agent d'autant plus conséquent qu'il est lui-même présent en forte quantité. Ceci dégrade inéluctablement le niveau de performance du produit (propergol) final.

De surcroit, l'homme du métier n'ignore pas que, de façon générale, pour obtenir un liant fortement chargé en cristaux, il est, non seulement nécessaire que les cristaux en cause présentent un rapport d'allongement faible, idéalement qu'ils soient sphériques, mais aussi que des cristaux de différentes tailles soient présents, typiquement des petits et des gros cristaux (les notions de « petits » et «gros») étant évidemment relatives), par exemple des cristaux microniques, voire submicroniques, et des cristaux d'une dizaine voire une centaine de microns.

Or, à ce jour, il est difficile d'obtenir de petits cristaux d'ADN (même par broyage) au vu de l'hydroscopie desdits petits cristaux. Les cristaux d'ADN aisément accessibles ont généralement une taille supérieure ou égale à 10 µm et ils ne conviennent donc pas pour l'obtention de propergols, et plus généralement de produits pyrotechniques composites, à fort taux de charges. Des propergols fortement chargés en cristaux d'ADN n'ont ainsi toujours pas connu, à ce jour, de développement industriel.

L'homme du métier, au vu des difficultés rappelées ci-dessus, n'a donc toujours pas développé industriellement des propergols à fort taux de charges d'ADN (cristaux) dans un liant de type PAG (i.e. des propergols type PAG/ADN (cristaux)), et ce, malgré les bonnes performances attendues de tels propergols (voir ci-dessus).

Des charges énergétiques, autres que l'ADN, existent par ailleurs, notamment l'hexogène (RDX), l'octogène (HMX) et l'hexanitrohexaazaisowurtzitane (CL20), pour lesquelles la production de cristaux (petits et gros cristaux), en vue de l'obtention de propergols à fort taux de charges, est parfaitement maîtrisée.

Les demandes de brevet FR 2 954 309 et FR 2 997 695 décrivent ainsi des explosifs fortement chargés en RDX, ledit RDX étant présent sous la forme de petits et gros cristaux.

Les brevets US 4 938 813, US 5 061 330 et US 5 507 891 décrivent des propergols solides renfermant des charges énergétiques, d'octogène (HMX) ou d'hexogène (RDX), dans des liants énergétiques, plastifiés avec des plastifiants énergétiques. L'impulsion spécifique de ces propergols est très inférieure à celle des propergols de type PAG/ADN. Leur vitesse de combustion est inférieure à 15 mm/s à une pression de 10 MPa, quand bien même leur composition renferme un catalyseur balistique. L'addition d'un catalyseur balistique génère, lors de la combustion de ces propergols, des particules, ce qui nuit à leur discrétion.

Le brevet US 5 690 868 décrit deux formulations pour l'obtention de propergols multicouches à liant énergétique oxétane, contenant, pour l'une, de l'hexanitrohexaazaisowurtzitane (CL20), et, pour l'autre, de l'hexogène (RDX) ou de l'octogène (HMX). La vitesse de combustion de la couche contenant du RDX ou du HMX est inférieure à celle de la couche contenant du CL20. Toutefois, bien que le CL20 soit donc un candidat potentiellement intéressant (plus intéressant, en tout état de cause, que le RDX ou le HMX) en substitution de l'ADN, sa sensibilité pyrotechnique rend difficile son utilisation, plus particulièrement à un fort taux de charge (>30 % en masse). Il ne peut donc être retenu comme une alternative à l'ADN.

L'homme du métier ignore, en fait, ni la sensibilité du CL20 *per se,* ni la très grande sensibilité d'un complexe ADN/CL20 susceptible de se former lorsque les deux types de charge (à l'état de cristaux) sont en présence (voir la publication dans RTO MP-23, 41-1 à 41-8 de May L. Chan et Alan D. Turner, intitulée « Minimum-signature propellant with mixed-oxidizer concept » (correspondant au document présenté au Symposium RTO AVT sur « Small Rocket Motors and Gas Generators for Land,Sea and air Launched Weapon Systems », qui s'est tenu à Corfou (Grèce) du 19 au 23 avril 1999)).

La demande de brevet US 2003/0047260 décrit des propergols, renfermant des cristaux d'ADN, des « prills » d'ADN et/ou des cristaux de CL20, dans un liant énergétique plastifié avec plastifiant(s) énergétique(s). Lesdits propergols présentent une signature minimale et une forte impulsion spécifique (il est indiqué une valeur calculée de 265 s à 7 MPa pour une détente 70/1), pour de tels propergols avec des charges d'ADN ou des charges d'ADN et des charges de CL20). Un catalyseur de combustion (catalyseur balistique) du type noir de carbone est opportunément présent dans la composition desdits propergols. Il est particulièrement décrit dans ce document des propergols avec cristaux d'ADN, des propergols avec cristaux et « prills » d'ADN, et des propergols avec « prills » d'ADN et cristaux de CL20. En présence de noir de carbone (catalyseur balistique), la vitesse de combustion de ces propergols est d'environ 25 mm/s à 10 MPa (voir les figures 2 à 6 de ladite demande).

L'art antérieur enseigne donc, d'une part, que les propergols de type PAG/ADN, à fort taux de charges énergétiques (ADN introduits sous forme de « prills »), ont une vitesse de combustion et une impulsion spécifique fortes mais que les propriétés (tout particulièrement de granulométrie) des cristaux d'ADN sont incompatibles avec la faisabilité de propergols du type PAG/cristaux d'ADN à fort taux de cristaux, et, d'autre part, que, si l'on ne considère que les performances, le CL20 est un substitut (au moins partiel) potentiel intéressant de l'ADN.

Les produits pyrotechniques composites renfermant des charges de RDX étant connus pour montrer une vitesse de combustion plus faible que ceux renfermant des charges de CL20, le RDX n'apparaissait donc, en aucune façon, selon l'enseignement de l'art antérieur, un candidat intéressant à associer à l'ADN, dans le but d'atteindre les performances recherchées dans le cadre de l'invention (vitesse de combustion, impulsion spécifique et discrétion élevées).

Dans un tel contexte, la demanderesse propose présentement un nouveau produit pyrotechnique composite particulièrement performant.

Il est du mérite de la demanderesse d'avoir identifié, à l'encontre de l'enseignement de l'art antérieur (voir ci-dessus), l'intérêt de co-formuler des charges d'ADN (cristaux) et des charges de RDX (cristaux) dans un liant de type PAG, tout particulièrement en référence aux objectifs de hautes vitesses de combustion et impulsion spécifique recherchées ; lesdits objectifs pouvant être atteints sans faire appel à des composants nuisibles sur le plan de la signature (de la discrétion) (la co-formulation en cause se révélant particulièrement intéressante selon une variante A = « fort » taux d'ADN et « faible » taux de RDX, mais aussi intéressante selon une variante B = « fort » taux de RDX et « faible » taux d'ADN, et donc, intéressante, de manière générale, aux taux massiques d'ADN et de RDX précisés ci-après. On indique d'ores et déjà ici que les notions de « fort » taux et « faible » taux sont des notions relatives, identiques ou non selon les contextes).

Selon son premier objet, la présente invention concerne donc de nouveaux produits pyrotechniques composites. Ils sont du type à liant énergétique réticulé renfermant des charges énergétiques. Ils renferment, plus précisément, dans un liant plastifié, comprenant un polymère énergétique réticulé et au moins un plastifiant énergétique, des charges énergétiques. De façon caractéristique :
- ledit polymère énergétique réticulé consiste en un polyazoture de glycidyle (PAG), ayant une masse moléculaire moyenne en nombre (Mn) comprise entre 700 et 3000 g/mol, réticulé, *via* ses fonctions terminales hydroxyles, avec au moins un agent de réticulation de type polyisocyanate ; et
- lesdites charges énergétiques, présentes à un taux massique (élevé) de 50 à 70 % (dans la composition dudit produit), consistent, pour au moins 95 % de leur masse, en de gros cristaux de dinitroamidure d'ammonium (ADN), présentant des tailles de 50 à 250 µm, et de petits cristaux d'hexogène (RDX), présentant des tailles de 1 à 10 µm :
   + lesdits gros cristaux de dinitroamidure d'ammonium (ADN), étant présents (dans la composition dudit produit) à un taux massique de 8 à 65 %, avantageusement de 10 à 60 %, et
   + lesdits petits cristaux d'hexogène (RDX) étant présents (dans la composition dudit produit) à un taux massique de 5 à 55 %, avantageusement de 8 à 50 %.

La structure des produits pyrotechniques composites de l'invention associe donc, de façon caractéristique :
- un liant énergétique spécifique comprenant un polymère énergétique de type PAG (hydroxytéléchélique) réticulé et au moins un plastifiant énergétique, et
- un fort taux (50 à 70 % massique) de charges énergétiques, à l'état de cristaux, dont au moins 95 % en masse, généralement au moins 97 % en masse, voire 100 % en masse, sont des charges (cristaux) énergétiques de nature spécifique : ADN (fortement énergétique) + RDX (qui s'est révélé, de façon inattendue, un partenaire (dudit ADN) beaucoup plus intéressant que le CL20). On peut parler de la présence d'un « cocktail » de charges (cristaux) énergétiques spécifique : ADN + RDX.

Le résultat recherché, quant au fort taux de charges, est obtenu (« de façon connue *per se* ») par la co-présence de gros cristaux (d'ADN aisés à obtenir) et de petits cristaux (de RDX également aisés à obtenir). Ces notions de « gros » et « petit » sont évidemment relatives. On peut indiquer que les cristaux d'ADN en cause sont généralement au moins 5 fois plus gros que les cristaux de RDX en cause, plus généralement au moins 10 fois plus gros, voire au moins 25 fois plus gros. Les cristaux de RDX présents sont microniques : ils présentent une taille de 1 à 10 µm (valeurs extrêmes comprises), très avantageusement de 2,5 à 5 µm (valeurs extrêmes comprises). On comprend bien évidemment que lesdits cristaux présentent des tailles de 1 à 10 µm (chaque cristal présentant une taille), avantageusement de 2,5 à 5 µm. Les cristaux d'ADN présentent une taille de 50 à 250 µm (valeurs extrêmes comprises) ; on comprend que lesdits cristaux présentent des tailles de 50 à 250 µm (chaque cristal présentant une taille)). La notion de taille de cristaux (employée ici en référence aux cristaux de RDX et d'ADN) est une notion générale familière à l'homme du métier. Elle fait référence à des coupes granulométriques obtenues par tamisage.

Cette association de petits et gros cristaux (aisés à obtenir) est particulièrement opportune en ce que, tout d'abord, elle ne requiert pas de petits cristaux d'ADN (voir la difficulté rappelée ci-dessus à obtenir de tels petits cristaux et le problème « aigu » de l'absorption d'eau par lesdits petits cristaux) et en ce qu'elle permet donc l'obtention d'un produit à fort taux de charges. De plus, la masse volumique du RDX (1,82 g/cm³) étant proche de celle de l'ADN (1,81 g/cm³), une répartition homogène des deux charges (des deux types de cristaux) dans le produit est assurée lors du procédé d'obtention du produit, sans difficulté particulière.

Cette association s'est révélée particulièrement avantageuse en référence aux performances visées.

La nature du liant (celle de son polymère précurseur) constitue donc l'un des éléments clés (de la composition) des produits pyrotechniques composites de l'invention.

Notons incidemment ici que le « un » polyazoture de glycidyle (= polymère précurseur du liant) doit se lire « au moins un » polyazoture de glycidyle dans tout le présent texte. En effet, il est nullement exclu du cadre de l'invention qu'un mélange d'au moins deux polyazotures de glycidyle (présentant des masses moléculaires (entre 700 et 3000 g/mol) et/ou des taux de ramification différents) soit utilisé comme polymère précurseur du liant des produits de l'invention.

Le polymère énergétique sélectionné comme précurseur du liant des produits de l'invention est donc un polyazoture, un polyazoture de glycidyle (PAG) qui présente des fonctions terminales hydroxy (un PAG hydroxytéléchélique) ; d'où 1) ses propriétés énergétiques et 2) sa capacité à être réticulé avec les agents de réticulation de type polyisocyanate.

Ledit polymère a une masse moléculaire adéquate (notamment, en référence à sa consistance (liquide) et à la consistance de son mélange avec essentiellement les charges et en référence à la teneur relative du liant réticulé en agent(s) de réticulation), masse moléculaire moyenne en nombre (Mn) comprise entre 700 et 3000 g/mol, avantageusement entre 1700 et 2300 g/mol.

Il est du mérite des inventeurs d'avoir sélectionné ce type (de polymère précurseur) de liant, (de polymère précurseur) de liant énergétique, convenant parfaitement pour utilisation avec les charges énergétiques sélectionnées (le « cocktail » de charges énergétiques, présentes à l'état de cristaux, préconisé).

Les agents de réticulation, de type polyisocyanate (au moins bifonctionnels), convenant à la réticulation d'un tel polyazoture de glycidyle (PAG) hydroxytéléchélique sont connus *per se.* Il peut notamment s'agir de di- ou triisocyanates. Il s'agit avantageusement de polyisocyanates, liquides, choisis parmi le toluène diisocyanate (TDI), l'isophorone diisocyanate (IPDI), le dicyclohexylméthylène diisocyanate (MDCI), l'hexaméthylène diisocyanate (HDI), le trimère dudit hexaméthylène diisocyanate (notamment commercialisé par la société Bayer sous la dénomination commerciale Desmodur® N 3300), le biuret trihexane isocyanate (BTHI), le 3,5,5-triméthyl-1,6-hexaméthylène diisocyanate et leurs mélanges. De façon particulièrement préférée, on utilise le trimère de l'hexaméthylène diisocyanate.

Lesdits agents de réticulation sont conventionnellement utilisés en quantité nécessaire et suffisante, pour assurer la réticulation du polymère (non excessive pour ne pas polluer le produit réticulé obtenu). Ils sont conventionnellement utilisés en une quantité telle que le rapport de pontage (NCO (de l'agent de réticulation)/OH (du polymère)) soit compris entre 0,8 et 1,4, soit avantageusement de 1.

Le polymère énergétique réticulé représente généralement de 10 à 14 % en masse de la composition totale des produits pyrotechniques composites de l'invention. Le polymère énergétique *per se* est généralement intervenu pour 8 à 12 % en masse, le au moins un agent de réticulation pour environ 2 % en masse.

On a bien compris que la nature du liant (celle de son polymère précurseur) n'est pas *per se* originale mais que l'intérêt de l'invention repose sur l'association d'un tel (polymère précurseur de) liant avec des charges énergétiques spécifiques.

De façon conventionnelle, au liant énergétique, est associé au moins un plastifiant énergétique. Le(s) plastifiant(s) énergétique(s) en cause est(sont) avantageusement de type nitrate et/ou nitramine. Le(s) plastifiant(s) énergétique(s) en cause est(sont) très avantageusement choisi(s) parmi le dinitrate de diéthylène glycol (DEGDN), le dinitrate de triéthylène glycol (TEGDN), le trinitrate de butanetriol (BTTN), le trinitrate de triméthyloléthane (TMETN), un mélange de 2,4-dinitro-2,4-diaza-pentane, de 2,4-dinitro-2,4-diaza-hexane et de 3,5-dinitro-3,5-diaza-heptane (et tout particulièrement le DNDA 5,7), et les nitrato éthyl nitramines (notamment le méthyl-2-nitratoéthyl nitramine (méthylNENA) et l'éthyl-2-nitratoéthyl nitramine (éthylNENA)) et leurs mélanges.

Le(s) plastifiant(s) des produits pyrotechniques de l'invention représente(nt) généralement de 10 à 30 % en masse, plus généralement de 15 à 25 % en masse, de la composition totale desdits produits.

La spécificité des charges énergétiques présentes (à l'état de cristaux) (du « cocktail » de telles charges énergétiques présent) constitue donc l'autre des éléments clés (de la composition) des produits pyrotechniques composites de l'invention.

Ladite spécificité réside, pour une part, dans la nature desdites charges ((cristaux d')ADN + (cristaux de) RDX) et, pour une autre part, dans la taille relative desdites charges (gros cristaux d'ADN et petits cristaux de RDX) ; cette taille relative desdites charges ((cristaux d')ADN + (cristaux de) RDX) permettant le fort taux global de charges : de 50 à 70 % en masse, avantageusement de 55 à 65 % en masse.

On a noté que la présence de charges énergétiques, autres que des charges (cristaux) d'ADN et des charges (cristaux) de RDX, n'est pas totalement exclue. En tout état de cause, des charges énergétiques, autre que lesdites charges d'ADN et de RDX, ne sont éventuellement présentes qu'à un taux massique maximum de 5 % en masse. Les charges des produits pyrotechniques composites de l'invention sont essentiellement, voire exclusivement, constituées desdits cristaux d'ADN et de RDX.

Comme indiqué ci-dessus :
- les cristaux d'ADN sont présents à raison de 8 à 65 %, avantageusement de 10 à 60 %, très avantageusement à raison de 40 à 60 %, en masse au sein de la composition des produits de l'invention ; et,
- les cristaux de RDX sont présents à raison de 5 à 55 %, avantageusement de 8 à 50 %, très avantageusement à raison de 8 à 20 %, en masse au sein de la composition des produits de l'invention.

Selon une variante particulièrement préférée, lesdits cristaux d'ADN sont présents à un taux massique de 40 à 60 % et lesdits cristaux de RDX à un taux massique de 8 à 20 %.

Pour ce qui concerne la taille desdites charges (des cristaux), on renvoie à ce qui a été développé plus en amont dans le présent texte. Pour ce qui concerne la morphologie desdites charges, il est évidemment souhaitable que les cristaux présentent un rapport d'allongement faible (≤ 2, avantageusement ≤ 1,5), idéalement qu'ils soient sphériques.

Selon une variante de l'invention (variante A ci-dessus), notamment la particulièrement préférée ci-dessus, le RDX est présent, comme substitut partiel de l'ADN, à un « faible » taux (typiquement ≤ 20 %), sous la forme de petits cristaux donc, d'où une forte teneur en charges (petits cristaux de RDX et gros cristaux d'ADN) possible, avec une diminution de l'intensité des problèmes inhérents à l'ADN (dans la mesure où moins d'ADN, sous la forme de gros cristaux, est présent) et, de manière totalement inattendue, la présence dudit RDX autorise toutefois l'obtention de valeurs de vitesse de combustion et d'impulsion spécifiques très intéressantes (voir les résultats de l'exemple 1 du tableau 1 ci-après).

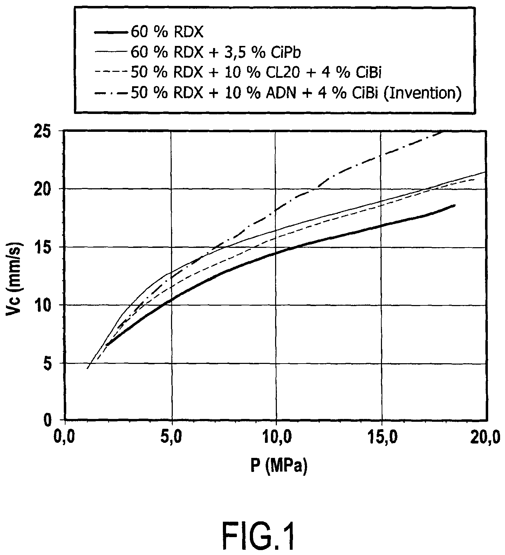

Selon une autre variante de l'invention (variante B ci-dessus), le RDX est présent à un « fort » taux (typiquement de 40 à 60 % en masse) et l'ADN, à un « faible » taux (typiquement de 8 à 20 % en masse), ce qui autorise évidemment de fortes teneurs en charges (petits cristaux de RDX et gros cristaux d'ADN), avec une diminution conséquente de l'intensité des problèmes inhérents à l'ADN, et, de manière inattendue, dans le cadre de cette variante aussi, des valeurs de vitesse de combustion et d'impulsion spécifiques intéressantes (certes toutefois moins intéressantes que dans le cadre de la première variante ci-dessus) ont été obtenues (voir les résultats de l'exemple 2 du tableau 1 ci-après et de l'exemple 2' de la figure 1).

On rappelle ici, à toutes fins utiles, que les notions de « fort » taux et « faible » taux sont des notions relatives, identiques ou non selon les contextes. Par ailleurs, on a bien compris que les deux variantes ci-dessus de l'invention ne sont pas exhaustives (la co-formulation de taux « équivalents » en ADN et RDX faisant bien évidemment partie intégrante de l'invention (voir ci-dessus)).

L'absence (ou la présence, en tout état de cause, en une quantité minime (< 3 % en masse)) de charges (cristaux) inorganiques, autres que l'ADN, au sein (de la composition) des produits pyrotechniques composites de l'invention est intéressante en référence au problème technique de la signature desdits produits en combustion (de la génération de fumées de combustion). Ainsi, la composition des produits pyrotechniques composites de l'invention est-elle avantageusement exempte de charges inorganiques autre que l'ADN.

La composition des produits pyrotechniques composites de l'invention est par ailleurs exempte de charges métalliques (susceptibles de générer des particules lors de leur combustion).

Les produits pyrotechniques composites de l'invention sont par ailleurs susceptibles de renfermer, et renferment généralement, dans leur liant, outre les charges et plastifiant(s), au moins un additif.

Parmi les additifs opportunément présents, on privilégie les additifs conventionnels ci-après : les catalyseurs de réticulation et les agents de stabilisation du(des) plastifiant(s) énergétique(s) présent(s). Ainsi, selon une variante avantageuse, les produits pyrotechniques composites de l'invention renferment donc dans leur composition, outre le polymère (PAG) réticulé, les plastifiant(s) et charges, au moins un additif ; ledit au moins un additif comprenant au moins un catalyseur de réticulation et/ou au moins un agent de stabilisation du(des) plastifiant(s) présent(s). Ledit au moins un catalyseur de polymérisation peut notamment être choisi parmi le triphénylbismuth et le dibutyldilaurate d'étain (DBTL). Présent, il l'est généralement à une teneur ne dépassant pas quelques centaines de ppm. Ledit au moins un agent de stabilisation du(des) plastifiant(s) présent(s) peut notamment consister en au moins une amine aromatique, telle la 2-nitrodiphénylamine (2-NDPA) et la N-méthylparanitroaniline (MNA). Présent, il l'est généralement à une teneur d'environ 1 % en masse.

D'autres additifs susceptibles d'être présents dans la composition des produits pyrotechniques composites de l'invention peuvent notamment consister en un ou plusieurs agents de mise en oeuvre (auxiliaire de fabrication). Le(s)dit(s) agent(s) sont généralement présent(s) à une teneur de 1 à 2 % en masse. Il n'est par ailleurs pas exclu que ladite composition renferme (au moins) un catalyseur de combustion (en référence à l'optimisation de sa vitesse de combustion). On comprend que la présence d'(au moins) un tel catalyseur de combustion peut être totalement superflue au sein d'une composition renfermant une forte teneur en ADN, mais qu'elle peut être opportune au sein d'une composition renfermant une faible teneur en ADN. Un tel au moins un catalyseur de combustion (consistant avantageusement en le citrate de bismuth) n'est ainsi pas présent ou, en tout état de cause, seulement présent en une faible quantité (≤ 4 % en masse). Ceci est évidemment avantageux en référence à la troisième stipulation du cahier des charges (la discrétion).

Les additifs éventuellement présents (au vu des propos ci-dessus, on a compris que généralement plusieurs types d'additif sont présents) représentent généralement au maximum 6 % en masse de la composition des produits pyrotechniques composites de l'invention. Ils représentent très généralement de 0,1 à 4 % en masse de la composition desdits produits pyrotechniques composites de l'invention.

Au vu des propos ci-dessus, on comprend que les produits pyrotechniques composites de l'invention ne sont pas d'un type nouveau mais qu'ils sont nouveaux de par l'association, dans leur composition, d'un liant spécifique (PAG (hydroxytéléchélique) (réticulé par au moins un polyisocyanate et plastifié par au moins un plastifiant énergétique) et d'un « cocktail » de charges énergétiques spécifique (cristaux d'ADN + cristaux de RDX).

Dans le cadre d'une variante avantageuse, la composition des produits pyrotechniques composites de l'invention, exprimées en pourcentages massiques, renferme donc :
- de 50 à 70 %, avantageusement de 55 à 65 %, de charges énergétiques, consistant, pour au moins 95 % de leur masse, en des cristaux d'ADN et des cristaux de RDX (voir ci-dessus),
- de 10 à 14 % du polymère énergétique (de type PAG hydroxytéléchélique) réticulé (*via* ses fonction terminales hydroxy par au moins un polyisocyanate),
- de 10 à 30 %, avantageusement de 15 à 25 %, d'au moins un plastifiant énergétique, et
- de 0 à 6 %, avantageusement de 0,1 à 4 %, d'au moins un additif.

Dans le cadre de cette variante avantageuse, ladite composition est généralement exempte de tout autre ingrédient et consiste donc en les ingrédients listés ci-dessus, présents en les quantités indiquées ci-dessus. On rappelle incidemment ici que ladite composition est avantageusement exempte de toute charge énergétique inorganique autre que l'ADN et de toute charge métallique, voire de toute charge énergétique inorganique autre que l'ADN, de toute charge métallique et de tout catalyseur de combustion.

Les produits de l'invention sont donc intéressants en termes de vitesse de combustion, d'impulsion spécifique, et de par la faible signature (discrétion) du panache généré lors de leur combustion, notamment en propulseur (leur composition ne renferme pas de charges métalliques générant des particules, pas ou très peu de charges énergétiques inorganiques autre que l'ADN) et aussi de par leur faisabilité. La co-formulation de gros cristaux d'ADN et de petits cristaux de RDX dans un liant énergétique de type PAG a permis d'obtenir des produits à fort taux de charges, particulièrement performants en référence au cahier des charges énoncé dans l'introduction du présent texte. L'association ADN + RDX s'est révélée, de façon surprenante, particulièrement intéressante. Les propos ci-dessus sont confirmés par les résultats du tableau 1 ci-après et ceux montrés sur la figure 1.

Selon son second objet, la présente invention concerne un procédé de préparation d'un produit pyrotechnique composite, tel que décrit ci-dessus. Ce procédé comprend :
- la constitution d'une pâte homogène par
   a) addition, avec agitation, dans un polyazoture de glycidyle adéquat (PAG hydroxytéléchélique présentant une masse moléculaire en nombre telle que précisée ci-dessus), d'au moins un plastifiant énergétique, des charges énergétiques et des autres ingrédients constitutifs du produit pyrotechnique composite recherché, à l'exception d'un quelconque agent de réticulation et d'un quelconque catalyseur de réticulation, et
   b) agitation du mélange résultant, sous vide partiel ;
- sous vide partiel, l'addition, à ladite pâte homogène constituée, dudit au moins un agent de réticulation et éventuellement d'au moins un catalyseur de réticulation, suivie d'une agitation du mélange constitué ;
- la coulée dudit mélange constitué agité dans au moins une structure ; et
- le traitement thermique dudit mélange constitué agité coulé dans ladite au moins une structure.

Les premières étapes de ce procédé (constitution de la pâte homogène puis du mélange de ladite pâte avec agent(s) de réticulation et éventuellement catalyseur(s) de réticulation) sont mises en oeuvre à une(des) température(s) adéquate(s), en référence à la viscosité du mélange concerné, au problème de la réaction de l'ADN présent avec le au moins un agent de réticulation présent (voir l'introduction du présent texte) (et bien évidemment à la stabilité des charges énergétiques présentes). Elles sont généralement mises en oeuvre entre 20 et 40°C (20≤T≤40°C).

Le traitement thermique (de réticulation) est généralement mis en oeuvre, à pression atmosphérique, à une température comprise entre 30 et 50°C (30≤T≤50°C), pendant plusieurs jours.

Il est, en tout état de cause, opportun, tout au long du procédé, d'opérer à une température non excessive (≤ 50°C), en vue de minimiser toute réaction de l'ADN avec le au moins un agent de réticulation.

Le vide partiel mentionné est destiné au dégazage du milieu au-dessus duquel il est appliqué. Il est généralement de 10 mm de Hg. On note incidemment qu'il n'est pas forcément d'intensité constante.

Ce procédé peut être considéré comme un procédé par analogie, mais, de façon caractéristique, il est mis en oeuvre avec le (polymère précurseur du) liant spécifique et le « cocktail » de charges (cristaux) énergétiques spécifique.

On se propose maintenant d'illustrer l'invention par les exemples ci-après et la figure 1 annexée.

Ladite figure 1 annexée montre les vitesses de combustion (en fonction de la pression) d'un propergol de l'invention et de trois propergols de référence.
**A.** On propose plus précisément ci-après les exemples comparatifs Réf. 1 à Réf. 5 et les exemples 1 et 2 illustrant l'invention.

Pour tous les exemples, le même polymère énergétique de type PAG hydroxytéléchélique (commercialisé par la société EURENCO (Mn(masse moléculaire en nombre) = 1900 g/mol) a été utilisé, le même agent de réticulation (Desmodur® N 3300 commercialisé par la société Bayer), les mêmes plastifiants (BTTN/TMETN : 30/70 (% massiques)), les mêmes stabilisants de plastifiant (MNA/2-NDPA : 75/25 (% massiques)) ont été utilisés et aussi des mêmes types de charges (cristaux) ont été utilisés, ADN : 50 à 250 µm, RDX : 2,5 à 10 µm , et CL20 : 20 à 50 µm. Le même procédé d'obtention du propergol, à partir de mélanges des ingrédients constitutifs dudit propergol, a été mis en oeuvre : premières étapes de mélange à 40°C, coulée, puis réticulation, en étuve, à la pression atmosphérique, à 45°C pendant 14 jours.

Dans la première partie du tableau 1 ci-après, on indique la composition massique des propergols et dans la seconde partie dudit tableau 1, on indique des propriétés desdits propergols (vitesses de combustion et impulsion spécifique). Les vitesses de combustion sont mesurées, les impulsions spécifiques calculées à 7 MPa pour une détente 70/1.

Les résultats obtenus avec les produits des Réfs. 1 (sans catalyseur de combustion) et 2 (avec catalyseur de combustion : CiPb) confirment que le RDX n'est pas *per se* performant.

Le produit selon la Réf. 3 (renfermant 62,5 % en masse de gros cristaux d'ADN) n'a pu être testé dans la mesure où il n'était pas sain (le bloc réticulé renfermait trop de bulles, témoins d'une réaction ADN + trimère de l'hexaméthylène diisocyanate (Desmodur® N 3300)). Le calcul confirme une forte valeur de l'impulsion spécifique (valeur donc théorique).

Le produit selon la Réf. 4 est performant mais son obtention implique la manipulation de cristaux de CL20 et le co-conditionnement de cristaux de CL20 et d'ADN.

Le produit selon la Réf. 5 (dont l'obtention implique la manipulation de cristaux de CL20) confirme que la performance d'un mélange RDX (50 %) + CL20 (10 %) + catalyseur de combustion (4 %) est supérieure à la performance du RDX (65 %) seul (voir les résultats du produit selon la Réf.1). Ladite performance dudit mélange RDX (50 %) + CL20 (10 %) + catalyseur de combustion (4 %) correspond, tout particulièrement pour ce qui concerne la vitesse de combustion, à celle du RDX (62,5 %) avec catalyseur de combustion (3,5 %) (voir les résultats du produit selon la Réf. 2). Cette performance reste inférieure, tout particulièrement pour ce qui concerne la vitesse de combustion, à celles d'un mélange « équivalent » ADN (10 %) + RDX (50 %) + catalyseur de combustion (4 %) (selon l'invention (voir les résultats du produit selon l'exemple 2).

L'exemple 1 illustre la variante particulièrement préférée de l'invention selon laquelle l'ADN est présent entre 40 % et 60 % en masse (exactement à 52 % en masse) et le RDX entre 8 % et 20 % en masse (exactement à 9,82 % en masse). Ledit RDX est ici présent en substitution partielle dudit ADN. Le propergol obtenu est très performant. De manière générale, les propergols de l'invention, selon cette variante particulièrement préférée, présentent des vitesses de combustion élevées supérieures à 20 mm/s à 10 MPa et à 40 mm/s à 18 MPa, et ce, en l'absence de catalyseur balistique, ainsi que des impulsions spécifiques élevées, supérieure, à 245 s (calculées à 7 MPa pour une détente de 70/1).

L'exemple 2 illustre la variante de l'invention selon laquelle le RDX est présent à un fort taux (> 20 % en masse , plus précisément de 50 % en masse), bien supérieur au taux d'ADN (10 % en masse). La coprésence des cristaux d'ADN, des cristaux de RDX (ADN + RDX = 60 % en masse) et du catalyseur de combustion (CiBi) se révèle très intéressante. Les performances obtenues sont supérieures à celles du RDX seul (Réf.1 : 65 % en masse de RDX) et à celle du RDX (62,5 % en masse) avec catalyseur de combustion (Réf.2).

**Tableau 1**

| | | Réf.1 | Réf.2 | Réf.3 | Réf.4 | Réf.5 | Ex.1 | Ex.2 |
|---|---|---|---|---|---|---|---|---|
| | Liant/charge | PAG/RDX | PAG/RDX | PAG/ADN | PAG/ ADN/CL20 | PAG/ RDX/CL20 | PAG/ ADN/RDX | PAG/ ADN/RDX |
| Charges énergétiques | RDX | 65 | 62,5 | / | / | 50 | 9,82 | 50 |
| | CL20 | / | / | / | 25 | 10 | / | / |
| | ADN | / | / | 62,5 | 40 | / | 52 | 10 |
| Polymère réticulé | PAG | 10,63 | 9,63 | 9,63 | 10,63 | 10,63 | 9,82 | 10,63 |
| | Desmodur® N 3300 | 2,14 | 2,01 | 2,01 | 2,14 | 2,14 | 2,1 | 2,14 |
| Plastifiant | BTTN/TMETN | 20,57 | 19,7 | 19,7 | 20,57 | 21,37 | 23,70 | 20,57 |
| | Stabilisants(MNA/2-NDPA) | 0,8 | 0,8 | 0,8 | 0,8 | 0,8 | 0,8 | 0,8 |
| Catalyseur de combustion | Citrate de plomb (CiPb) | / | 3,5 | | / | / | / | / |
| | Citrate de bismuth (CiBi) | | | 3,5 | | 4 | | 4 |
| Auxiliaires de fabrication | | 0,86 | 1,86 | 1,86 | 0,86 | 1,06 | 1,76 | 1,86 |
| Propriétés | Vc (mm/s) à 10 MPa | 8,8 | 16,4 | / | ∼25 | 16,0 | 29,1 | 18,1 |
| | Vc (mm/s) à 18 MPa | 15,3 | 20,4 | / | ∼ 33 | 20,4 | 42 | 25,2 |
| | Isp (7 Mpa) (s) | 236 | 236 | 251 | 258 | 247 | 250 | 239 |

**B.** Les vitesses de combustion (en fonction de la pression) ont été mesurées pour des produits analogues à ceux du tableau 1 :
   - un produit de l'invention selon un exemple 2' (dont la composition renfermait 10 % en masse de cristaux d'ADN (50-250 µm) et 50 % en masse de cristaux de RDX (2,5 - 10 µm) (i.e. 60 % en masse de cristaux énergétiques) dans un liant (obtenu à partir d'un prémix (34,5 % en masse de PAG (voir **A** ci-dessus) + triisocyanate (trimère du HDI, Desmodur® N3300 de Bayer) + BTTN/TMETM (30/70) + stabilisants desdits BTTN et TMETM) + 4 % en masse de citrate de bismuth (catalyseur de combustion) + 1,5 % en masse d'auxiliaires de fabrication) ; et
   - trois produits de référence :
      + un produit Réf. 1' (dont la composition renfermait 60 % en masse de cristaux de RDX (2,5 - 10 µm) dans un liant (obtenu à partir d'un prémix {38,5 % en masse de PAG (voir **A** ci-dessus) + triisocyanate (trimère du HDI, Desmodur® N3300 de Bayer) + BTTN/TMETM (30/70) + stabilisants desdits BTTN et TMETM} + 1,5 % en masse d'auxiliaires de fabrication) ;
      + un produit Réf. 2' (dont la composition renfermait 60 % en masse de cristaux de RDX (2,5 - 10 µm) dans un liant (obtenu à partir d'un prémix (35 % en masse de {PAG (voir **A** ci-dessus) + triisocyanate (trimère du HDI, Desmodur® N3300 de Bayer) + BTTN/TMETM (30/70) + stabilisants desdits BTTN et TMETM} + 3,5 % en masse de citrate de plomb (catalyseur de combustion) +1,5 % en masse d'auxiliaires de fabrication) ; et
      + un produit Réf. 5' (dont la composition renfermait 50 % en masse de cristaux de RDX (2,5 - 10 µm) et 10 % en masse de cristaux de CL20 (20-50 µm) dans un liant (obtenu à partir d'un prémix {34,5 % en masse de PAG (voir **A** ci-dessus) + diisocyanate (trimère du HDI, Desmodur® N3300 de Bayer) + BTTN/TMETM (30/70) + stabilisants desdits BTTN et TMETM} + 4 % en masse de citrate de bismuth (catalyseur de combustion) + 1,5 % en masse d'auxiliaires de fabrication).

La considération des courbes de la figure 1 fait ressortir l'intérêt des produits pyrotechniques composites de l'invention, plus particulièrement celui desdits produits selon la variante de l'invention à « faible » taux d'ADN (variante B ci-dessus).

## Revendications

1. Produit pyrotechnique composite renfermant, dans un liant plastifié, comprenant un polymère énergétique réticulé et au moins un plastifiant énergétique, des charges énergétiques, **caractérisé en ce que** :
- ledit polymère énergétique réticulé consiste en un polyazoture de glycidyle (PAG), ayant une masse moléculaire moyenne en nombre (Mn) comprise entre 700 et 3000 g/mol, réticulé, *via* ses fonctions terminales hydroxyles, avec au moins un agent de réticulation de type polyisocyanate ; et
- lesdites charges énergétiques, présentes à un taux massique de 50 à 70 %, consistent, pour au moins 95 % de leur masse, en de gros cristaux de dinitroamidure d'ammonium (ADN), présentant des tailles de 50 à 250 µm, et de petits cristaux d'hexogène (RDX), présentant des tailles de 1 à 10 µm :
+ lesdits gros cristaux de dinitroamidure d'ammonium (ADN) étant présents à un taux massique de 8 à 65 %, avantageusement de 10 à 60 %, et
+ lesdits petits cristaux d'hexogène (RDX) étant présents à un taux massique de 5 à 55 %, avantageusement de 8 à 50 %.

2. Produit pyrotechnique composite selon la revendication 1, **caractérisé en ce que** ledit polyazoture de glycidyle (PAG) a une masse moléculaire moyenne en nombre (Mn) comprise entre 1700 et 2300 g/mol.

3. Produit pyrotechnique composite selon la revendication 1 ou 2, **caractérisé en ce que** ledit au moins un plastifiant énergétique est de type nitrate et/ou nitramine.

4. Produit pyrotechnique composite selon l'une quelconque des revendications 1 à 3, **caractérisé en ce que** lesdites charges énergétiques sont présentes à un taux massique de 55 à 65 %.

5. Produit pyrotechnique composite selon l'une quelconque des revendications 1 à 4, **caractérisé en ce que** lesdits cristaux de dinitroamidure d'ammonium (ADN) sont présents à un taux massique de 40 à 60 % et lesdits cristaux d'hexogène (RDX) à un taux massique de 8 à 20 %.

6. Produit pyrotechnique composite selon l'une quelconque des revendications 1 à 5, **caractérisé en ce qu'**il renferme en outre au moins un additif.

7. Produit pyrotechnique composite selon la revendication 6, caractérisé en ce ledit au moins un additif comprend au moins un catalyseur de réticulation et/ou au moins un agent de stabilisation du au moins un plastifiant énergétique.

8. Produit pyrotechnique composite selon l'une quelconque des revendications 1 à 7, **caractérisé en ce que** sa composition, exprimée en pourcentages massiques, renferme :
- de 50 à 70 %, avantageusement de 55 à 65 %, desdites charges énergétiques, consistant pour au moins 95 % de leur masse, en lesdits cristaux d'ADN et lesdits cristaux de RDX,
- de 10 à 14 % dudit polymère énergétique réticulé,
- de 10 à 30 %, avantageusement de 15 à 25 %, dudit au moins un plastifiant énergétique, et
- de 0 à 6 %, avantageusement de 0,1 à 4 %, d'au moins un additif.

9. Procédé de préparation d'un produit pyrotechnique composite selon l'une quelconque des revendications 1 à 8, **caractérisé en ce qu'**il comprend :
- la constitution d'une pâte homogène par
a) addition, dans ledit polyazoture de glycidyle, dudit au moins un plastifiant énergétique, des charges énergétiques et des autres ingrédients constitutifs du produit pyrotechnique composite recherché à l'exception d'un quelconque agent de réticulation et d'un quelconque catalyseur de réticulation, et
b) agitation du mélange résultant, sous vide partiel ;
- sous vide partiel, l'addition, à ladite pâte homogène constituée, dudit au moins un agent de réticulation et éventuellement d'au moins un catalyseur de réticulation, suivie d'une agitation du mélange constitué ; puis
- la coulée dudit mélange constitué agité dans au moins une structure ; et
- le traitement thermique dudit mélange constitué agité coulé dans ladite au moins une structure.

## Patentansprüche

1. Pyrotechnisches Verbundprodukt, das in einem plastifizierten Bindemittel, das ein vernetztes energetisches Polymer und mindestens einen energetischen Plastifizierer umfasst, energetische Ladungen enthält, **dadurch gekennzeichnet, dass**:
- das vernetzte energetische Polymer aus einem Glycidylpolyazid (PAG) besteht, das ein zahlenmittleres Molekulargewicht (Mn) zwischen 700 und 3000 g/mol aufweist und über seine Hydroxylendgruppen mit mindestens einem Vernetzungsmittel vom Typ Polyisocyanat vernetzt ist, und
- die energetischen Ladungen, die einen Massengehalt von 50 bis 70 % aufweisen, für mindestens 95 % ihrer Masse aus großen Ammoniumdinitramid (ADN)-Kristallen mit Größen von 50 bis 250 µm und kleinen Hexogen (RDX)-Kristallen mit Größen von 1 bis 10 µm bestehen:
+ wobei die großen Ammoniumdinitramid (ADN)-Kristalle mit einem Massengehalt von 8 bis 65 %, vorzugsweise 10 bis 60 %, vorliegen und
+ wobei die kleinen Hexogen (RDX)-Kristalle mit einem Massengehalt von 5 bis 55 %, vorzugsweise 8 bis 50 %, vorliegen.

2. Pyrotechnisches Verbundprodukt gemäß Anspruch 1, **dadurch gekennzeichnet, dass** das Glycidylpolyazid (PAG) ein zahlenmittleres Molekulargewicht (Mn) zwischen 1700 und 2300 g/mol aufweist.

3. Pyrotechnisches Verbundprodukt gemäß Anspruch 1 oder 2, **dadurch gekennzeichnet, dass** der mindestens eine energetische Plastifizierer vom Typ Nitrat und/oder Nitramin ist.

4. Pyrotechnisches Verbundprodukt gemäß einem der Ansprüche 1 bis 3, **dadurch gekennzeichnet, dass** die energetischen Ladungen mit einem Massengehalt von 55 bis 65 % vorliegen.

5. Pyrotechnisches Verbundprodukt gemäß einem der Ansprüche 1 bis 4, **dadurch gekennzeichnet, dass** die Ammoniumdinitramid (ADN)-Kristalle mit einem Massengehalt von 40 bis 60 % und die Hexogen (RDX)-Kristalle mit einem Massengehalt von 8 bis 20 % vorliegen.

6. Pyrotechnisches Verbundprodukt gemäß einem der Ansprüche 1 bis 5, **dadurch gekennzeichnet, dass** es ferner mindestens einen Zusatzstoff enthält.

7. Pyrotechnisches Verbundprodukt gemäß Anspruch 6, **dadurch gekennzeichnet, dass** der mindestens eine Zusatzstoff mindestens einen Vernetzungskatalysator und/oder mindestens ein Stabilisierungsmittel für den mindestens einen energetischen Plastifizierer umfasst.

8. Pyrotechnisches Verbundprodukt gemäß einem der Ansprüche 1 bis 7, **dadurch gekennzeichnet, dass** seine Zusammensetzung, ausgedrückt in Massenprozenten, enthält:
- 50 bis 70 %, vorzugsweise 55 bis 65 %, der energetischen Ladungen, die für mindestens 95 % ihrer Masse aus den ADN-Kristallen und den RDX-Kristallen bestehen,
- 10 bis 14 % des vernetzten energetischen Polymers,
- 10 bis 30 %, vorzugsweise 15 bis 25 %, des mindestens einen energetischen Plastifizierers, und
- 0 bis 6 %, vorzugsweise 0,1 bis 4 %, des mindestens einen Zusatzstoffes.

9. Verfahren zur Herstellung eines pyrotechnischen Verbundprodukts gemäß einem der Ansprüche 1 bis 8, **dadurch gekennzeichnet, dass** es umfasst:
- Bilden einer homogenen Paste durch
a) Zusetzen des mindestens einen energetischen Plastifizierers, der energetischen Ladungen und der anderen Bestandteile des gewünschten pyrotechnischen Verbundprodukts in das Glycidylpolyazid, mit Ausnahme jeglicher Vernetzungsmittel und jeglicher Vernetzungskatalysatoren, und
b) Rühren des resultierenden Gemisches unter Teilvakuum,
- Zusetzen des mindestens einen Vernetzungsmittels und gegebenenfalls mindestens eines Vernetzungskatalysators in die homogene Paste unter Teilvakuum, und anschließendes Rühren der gebildeten Mischung, dann
- Gießen der gerührten gebildeten Mischung in mindestens eine Struktur, und
- Wärmebehandeln der in die mindestens eine Struktur gegossenen gerührten gebildeten Mischung.

## Claims

1. A composite pyrotechnic product containing energetic charges in a plasticized binder comprising a cured energetic polymer and at least one energetic plasticizer, the product being **characterized in that**:
• said cured energetic polymer consists of a glycidyl azide polymer (GAP) having a number average molecular weight (Mn) lying in the range 700 g/mol to 3000 g/mol and cured via its hydroxyl terminal functions with at least one curing agent of polyisocyanate type; and
• said energetic charges present at a content in the range 50% to 70% by weight consisting, for at least 95% of their weight, of large crystals of ammonium dinitramide (ADN) which present sizes in the range 50 to 250µm and of small crystals of hexogen (RDX) which present sizes in the range 1 to 10pm:
+ said large crystals of ammonium dinitramide (ADN) being present at a content in the range 8% to 65% by weight, advantageously in the range 10% to 60% by weight; and
+ said small crystals of hexogen (RDX) being present at a content in the range 5% to 55% by weight, advantageously in the range 8% to 50% by weight.

2. The composite pyrotechnic product according to claim 1, **characterized in that** said glycidyl azide polymer (GAP) has a number average molecular weight (Mn) lying in the range 1700 g/mol to 2300 g/mol.

3. The composite pyrotechnic product according to claim 1 or claim 2, **characterized in that** said at least one energetic plasticizer is of the nitrate and/or nitramine type.

4. The composite pyrotechnic product according to any one of claims 1 to 3, **characterized in that** said energetic charges are present at a content in the range 55% to 65% by weight.

5. The composite pyrotechnic product according to any one of claims 1 to 4, **characterized in that** said crystals of ammonium dinitramide (ADN) are present at a content in the range 40% to 60% by weight and said crystals of hexogen (RDX) are present at a content in the range 8% to 20% by weight.

6. The composite pyrotechnic product according to any one of claims 1 to 5, **characterized in that** it further contains at least one additive.

7. The composite pyrotechnic product according to claim 6, **characterized in that** said at least one additive comprises at least one curing catalyst and/or at least one plasticizer agent for plasticizing the at least one energetic plasticizer.

8. The composite pyrotechnic product according to any one of claims 1 to 7, **characterized in that** its composition, expressed in percentages by weight, contains:
• 50% to 70%, advantageously 55% to 65%, of said energetic charges, consisting, for at least 95% of their weight, of said crystals of ADN and said crystals of RDX;
• 10% to 14% of said cured energetic polymer;
• 10% to 30%, advantageously 15% to 25%, of said at least one energetic plasticizer; and
• 0% to 6%, advantageously 0.1% to 4%, of at least one additive.

9. A method of preparing a composite pyrotechnic product according to any one of claims 1 to 8, the method being **characterized in that** it comprises:
• constituting a homogeneous paste by:
a) adding in said glycidyl azide polymer said at least one energetic plasticizer, energetic charges, and other ingredients constituting the looked-for composite pyrotechnic product with the exception of any curing agent and of any curing catalyst; and
b) stirring the resulting mixture under a partial vacuum;
• under a partial vacuum, adding to said resulting homogeneous paste, said at least one curing agent and optionally at least one curing catalyst, followed by stirring the resulting mixture; then
• casting said stirred resulting mixture in at least one structure; and
• heat treating said stirred resulting mixture cast in said at least one structure.
